(19) Europäisches Patentamt
European Patent Office
Office européen des brevets

(11) EP 0 841 584 A2

(12) EUROPEAN PATENT APPLICATION

(43) Date of publication:
13.05.1998 Bulletin 1998/20

(51) Int. Cl.$^6$: G02B 9/10, G02B 21/08

(21) Application number: 97203494.6

(22) Date of filing: 10.11.1997

(84) Designated Contracting States:
AT BE CH DE DK ES FI FR GB GR IE IT LI LU MC NL PT SE

(30) Priority: 11.11.1996 JP 298628/96

(71) Applicant: Nikon Corporation
Tokyo 140 (JP)

(72) Inventor: Nihoshi, Toshiaki
2-3, Maranouchi 3-chome Chyoda-ku Tokyo (JP)

(74) Representative:
Michelotti, Giuliano et al
DRAGOTTI & ASSOCIATI SRL,
Galleria San Babila, 4/D
20122 Milano (IT)

(54) Condenser lens system and microscope illuminating optical system

(57) The goal of the disclosed invention is to obtain a condenser lens system which is applicable to illumination conditions of objective lenses with super-wide fields of view in a range between 1x and 100x. The condenser lens system consists of, between the light source and the surface of the illuminated object: a first lens group which has negative refractive power, a second lens group which has positive refractive power, and a third lens group which has positive refractive power. The first and third lens groups are separately movable to an application position which is located on the optical axis, and the removed position, which is located outside the optical axis. When using a high-magnification objective lens of the microscope, the first lens group is placed at the removed position and the third lens group is placed at the application position so that the condenser lens system as a whole has a positive refractive power. When using a low-magnification objective lens, the first lens group is placed at the application position and the third lens group is placed at the removed position so that the condenser lens system as a whole is substantially an afocal system.

FIG. 6

(a)

(b)

(c)

EP 0 841 584 A2

## Description

### FIELD OF THE INVENTION

The present invention relates to a condenser lens system for use in an illuminating optical system which illuminates study samples and the like and to a microscope illuminating optical system containing the condenser lens system.

### BACKGROUND OF THE INVENTION

Study objects and methods of study for using a microscope vary, such that a wide variety of objective lenses from ones with low magnification to ones with high magnification are used. In the case of a study of samples and the like by a microscope, use of an illuminating optical system for samples and the like is common. Nonetheless, it is difficult to use only one illuminating optical system to correspond to the wide variety of magnifications. In general, a condenser lens system has a limited magnification range of about 10x. This is because the requirements for numerical aperture and illuminated field size contradict each other in correspondence to a change in magnification. Thus, there are limitations satisfying both requirements at the same time over a wide range of magnification. Simply stated, on one hand, the higher the magnification, the larger the numerical aperture whereas, on the other hand, the lower the magnification, the larger the illuminated field size.

Therefore, in the case for which the magnification of an objective lens is higher than 10x, it is necessary to change the numerical aperture and illuminated field size of the illuminating optical system by some switching means. This change is generally performed by changing the focal length of a condenser lens system.

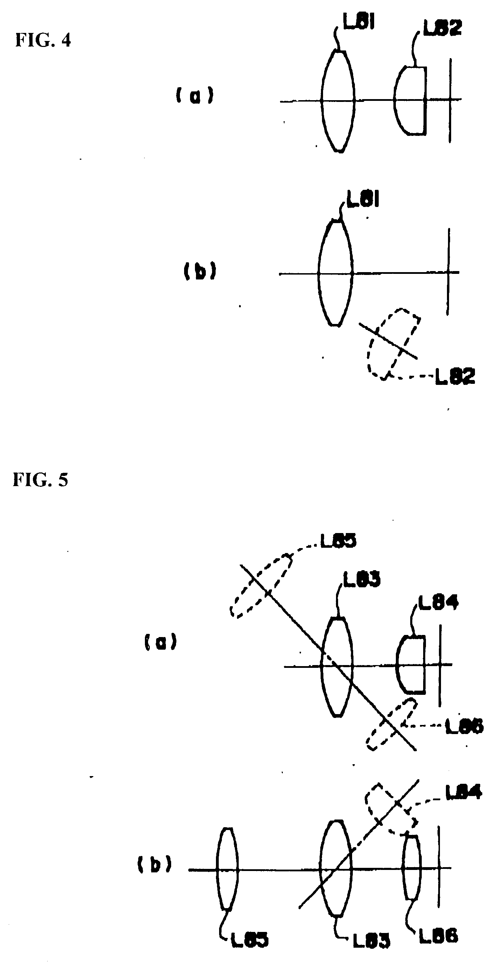

In a conventional switching means, as shown in Figure 4, a condenser lens system can consist of up to two lenses being used at a time, L81 (a low-magnification lens) and L82 (a high-magnification lens). In the case of this condenser lens system, both lenses are either placed on the optical axis (application position) Figure 4a, or just the low-magnification objective lens L81 is used and lens L82 is placed at a removed position, Figure 4b.

Another conventional switching means, as shown in Figure 5, teaches a condenser lens system with two low-magnification lenses L85 and L86 which are either removed from the optical axis when a high-magnification lens L84 is placed at an application position on the optical axis and a lens L83 is fixed on the optical axis or the high-magnification lens L84 is removed and the two low-magnification lenses L85 and L86 are placed at application positions on the optical axis along with lens L83. This example of a condenser lens system is shown in Japanese Laid- Open Patent Sho. 52-15552 and WO 94/07169.

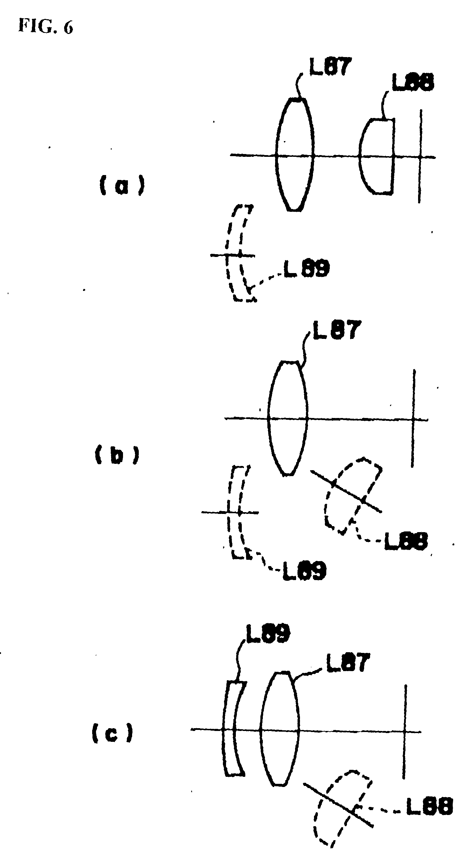

Still another conventional switching means, as shown in Figure 6, shows a condenser lens system which consists of a three step operation which must be followed in order to switch between the high magnification lens and the low magnification lens. In Figure 6a, the high-magnification lens L89 is removed from the optical axis, while the low-magnification lens L88 is placed at an application position on the optical axis and the lens L87 is fixed on the optical axis. In Figure 6b, both lenses L88 and L89 are next removed while lens L87 remains fixed on the optical axis. In Figure 6c, the low-magnification lens L88 is then removed while lenses L89 and L87 remain on the optical axis. This example is shown in Japanese Laid-Open Patent Sho. 63-183414.

The example shown in Figure 4 is a conventional method which is generally used and has a simple structure. Nonetheless, it has a problem in that the magnification range for an applicable high or low magnification objective lens is limited to a small range. In the case of the example shown in Figure 5, correspondence to a low-magnification objective lens is difficult. It is only possible to correspond to an objective lens of up to about 2x magnification as taught in the above publication. Also, in the case of the example shown in Figure 6, lenses are switched in three steps, which is inconvenient in operation Additionally, its structure tends to be complicated and its size tends to be large. In the case of a condenser lens system of Figure 6 shown in the above publication (Japanese Laid-Open Patent Sho. 63-183414), it is only possible to correspond to a low-magnification objective lens as low as 1.25x.

The present invention, provides a condenser lens system having a simple structure which enables an operation capable of corresponding to illumination conditions of a super-wide field of view (field of view number over 25) for a high or low magnification objective lens with a range of 1 x to 100x. The condenser lens system is intended for use with a microscope illuminating optical system.

### SUMMARY OF THE INVENTION

A condenser lens system for use in an illuminating optical system arranged on an optical axis between a source of light and a surface of an illuminated object comprising:

a first lens group which has negative refractive power;

a second lens group which has positive refractive power and which is located between the first lens group and the surface of the illuminated object; and

a third lens group which has positive refractive power and which is located between the second lens group and the surface of the illuminated object;
wherein:

the first lens group is movable between a first position on the optical axis and a second position outside the optical axis;

the third lens group is movable between a third position on the optical axis and a fourth position outside the optical axis.

With the condenser lens system of the present invention, it is possible to adjust the illumination conditions of a high or low magnification objective lens between 1x and 100x magnification by switching from a first application condition wherein the first lens group is placed at a removed position and the third lens group is placed at an application position along the optical axis to a second application condition wherein the first lens group is placed at an application position along the optical axis and the third lens group is placed at a removed position and visa versa.

In order for the second lens group to illuminate a wide field of view of 25 mm, which is required for an objective lens of 1x, it is preferable that its diameter is more than 26 mm.

Moreover, a magnification $\beta$ of the condenser lens system in the second application condition satisfies the following condition:

$$1.1 < \beta < 1.5,$$

so that a condenser lens system which satisfies both a field of view and a numerical aperture can be obtained.

The microscope illuminating optical system of the present invention can be structured with a relay optical system (a lens system which projects light from one end of the lens system to the other) which is located on the optical path between the above mentioned condenser lens system to form a light source image. In this microscope illuminating optical system:

the first application condition is a high-magnification condition; and

the second application condition is a low-magnification condition whereby,

an optical system from the light source to the surface of the illuminated object forms a Koehler illuminating optical system in the first application condition; and

an optical system from the light source to the surface of the illuminated object forms a critical illuminating optical system.

Additionally, it is preferable that the microscope illuminating optical system satisfies the conditions that:

in the first application, a field stop is placed at a conjugate point with the surface of said illuminated object;

an aperture stop is placed where the light source image is formed by the relay optical system; and

a light source-side focal point of the condenser lens system in the first application condition is arranged to be identical to the position of the aperture stop.

Accordingly, it is preferable that the aperture stop is located between the first lens group and the second lens group which are placed in the application position.

Also, the field stop in the second application condition is located to determine numerical apertures at the surface of the illuminated object.

The microscope illuminating optical system of the present invention is capable of illumination over a wide magnification range from high magnification to low magnification by simply adjusting the condenser lens system to the first application condition when a high-magnification objective lens (e.g. 10 to 100x) of the microscope is used and to the second application condition when a low-magnification objective lens is used (e.g. 1 to 4x).

## BRIEF DESCRIPTION OF THE DRAWINGS

Figure 1 shows the overall layout of a microscope illuminating optical system in accordance with the present invention.

Figures 2a and 2b show the two structures of the condenser lens system of the present invention for use in the microscope illuminating optical system of Figure 1.

Figures 3a and 3b show the microscope illuminating optical system including the condenser lens system of the present invention which is changed in accordance with the use of a high-magnification objective lens or a low-magnification objective lens.

Figures 4a and 4b show the structures of a condenser lens system of conventional technology.

Figures 5a and 5b show the structures of another condenser lens system of conventional technology.

Figures 6a, 6b and 6c show the structures of still another condenser lens system of conventional technology.

## DETAILED DESCRIPTION OF THE PREFERRED EMBODIMENT

The following is a description of the preferred embodiment of the present invention with reference to the drawings.

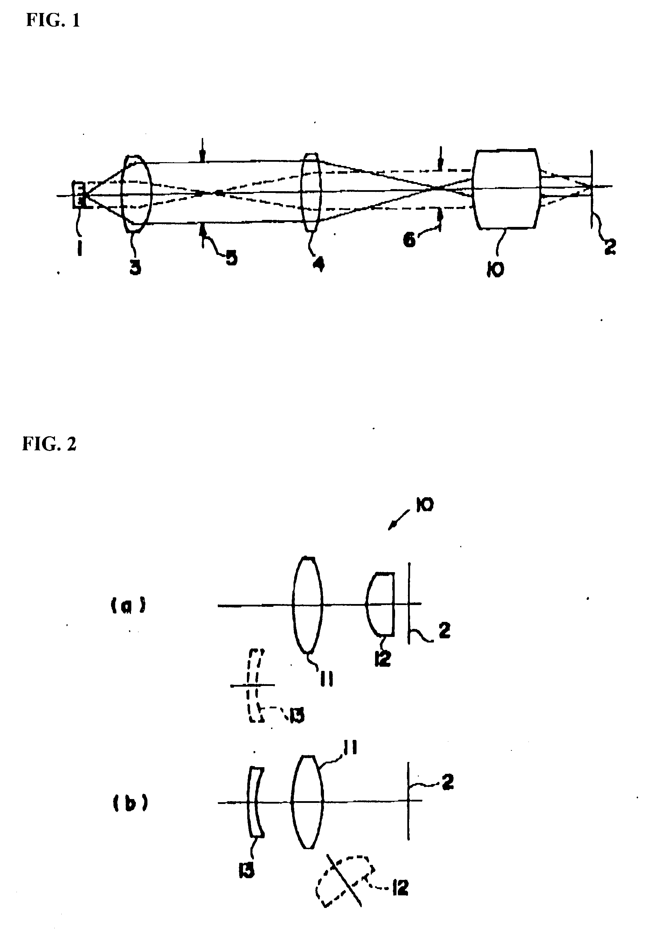

Figure 1 shows a microscope illuminating optical system containing the condenser lens system of the present invention. In this optical system, collector lens 3 having positive refractive power, field lens 4 having positive refractive power and condenser lens system 10 which consists of a low-magnification negative lens 13 (first lens group), a fixed positive lens 11 (second lens group) and a positive lens 12 for high-magnification (third lens group) are present. These lenses are located in this order on the optical axis proceeding from a light source 1 to the surface of an illuminated object 2. A relay optical system is formed by collector lens 3 and field lens 4.

Light source 1 is located at a front focal point of collector lens 3. Light leaves light source 1, passes collector lens 3, and enters field lens 4 as parallel light beams, as shown by the solid lines in Figure 1. Field stop 5 is located at a back focal point of collector lens 3. Field stop 5 is capable of adjusting the diameter of the parallel light beams. Field lens 4 is located such that the field stop 5 is at the front focal point of field lens 4.

After the parallel light beams enter field lens 4, they are converged by the field lens onto the back focal point and enter condenser lens system 10 as divergent light. The fact that aperture stop 6 is located at the back focal point of field lens 4 indicates that light source 1 and aperture stop 6 are at a conjugate position in relation to the relay optical system (collector lens 3 and field lens 4).

On the other hand, as shown by a dotted line in the figure, the parallel light beams which leave light source 1 and enter collector lens 3 are converged by collector lens 3 onto the back focal point of collector lens 3, at which field stop 5 is located. Converging onto one point, the light shown by the dotted line is substantially unaffected by field stop 5. The convergent light diverges again into a divergent light beam which becomes a parallel light beam through field lens 4 because the back focal point of collector lens 3 overlaps the front focal point of field lens 4. The diameter of the parallel light beam is adjustable by aperture stop 6. Converging onto one point at aperture stop 6, the light shown by the solid line is substantially unaffected by aperture stop 6.

Figure 2 shows a detailed structure of condenser lens system 10 in the microscope illuminating optical system of Figure 1. Condenser lens system 10 consists of a fixed positive lens 11 (second lens group), which is fixed on the optical axis, a positive lens 12 for high-magnification (third lens group), which is removed from the optical axis, and a low-magnification negative lens 13 (first lens group), which is removed from the optical axis. When using a high-magnification objective lens, as shown in Figure 2 (a), high-magnification positive lens 12 is placed at a position on the optical axis (application position) and low-magnification negative lens 13 is removed from the optical axis. When using a low-magnification objective lens, on the other hand, as shown in Figure 2 (b), low-magnification negative lens 13 is placed at an application position on the optical axis and high-magnification positive lens 12 is removed from the optical axis.

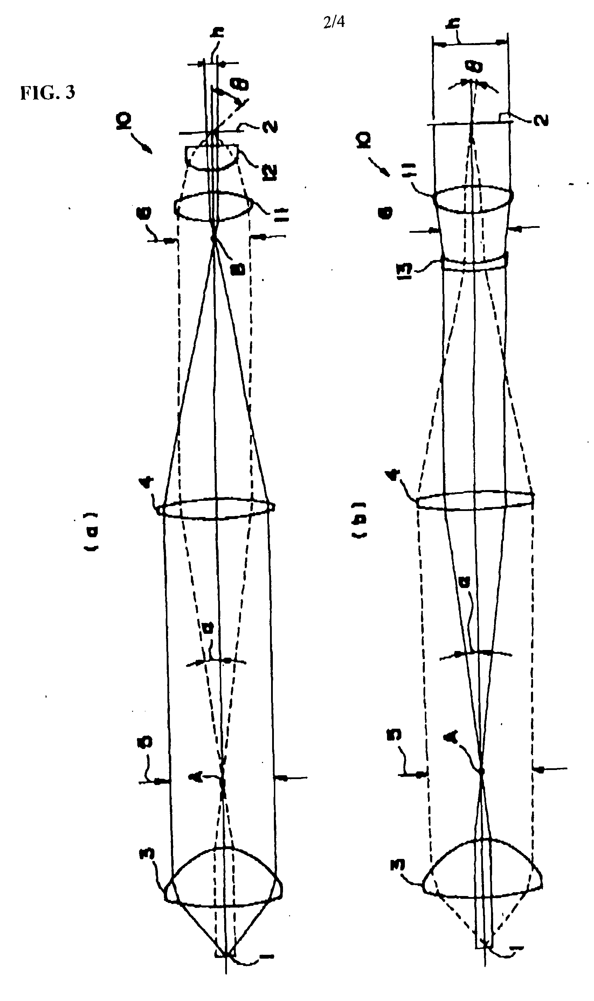

Figure 3 shows the microscope illuminating optical system with the condenser lens system adjusted for use with either high-magnification or low-magnification objective lenses. The arrangement of Figure 1 with the condenser lens system using a high-magnification objective lens is shown in Figure 3 (a).

As described previously, divergent light from light source 1, shown by the solid lines, passes through collector lens 3, enters field lens 4 as parallel light beams, passes through field lens 4, and converges as convergent light onto position B of aperture stop 6. Thereafter, it enters condenser lens system 10 (a lens group consisting of fixed positive lens 11 and high-magnification positive lens 12) as divergent light. Position B in this condition is found at the front focal point of condenser lens system 10. After the light passes through condenser lens system 10, it illuminates the surface of illuminated object 2. As shown, this optical system forms a Koehler illuminating optical system. The size of the surface of illuminated object 2 which the parallel light beam illuminates, has an, the illuminated field size h, which is adjustable by field stop 5.

In the microscope illuminating optical system which forms the Koehler illuminating optical system of Figure 3 (a), parallel light beams from the light source, shown by the dotted lines in the figure are converged onto position A of the field stop by collector lens 3 and passes as divergent light through field lens 4 whereupon the light then exits as a parallel light beam. The size of the parallel light beam is adjustable by aperture stop 6; after being adjusted by aperture stop 6, the parallel light beam enters condenser lens system 10.

The surface of illuminated object 2 is located at the back focal point of condenser lens system 10 (a lens group consisting of fixed positive lens 11 and high-magnification positive lens 12); after the parallel light beams enter condenser lens system 10, they are converged onto one point on the surface of illuminated object 2. According to the angle $\theta$, formed by the convergent light which is formed after the light leaves condenser lens system 10, numerical aperture N.A. = sin $\theta$ is determined. It is indicated that numerical aperture N.A. is adjustable by aperture stop 6. Also, in this illuminating system, field stop 5 and the surface of illuminated object 2 are at a position conjugate to each other.

The illuminating system which farms the Koehler illuminating optical system of Figure 3 (a) is used for illumination with objective lenses of 10x to 100x; specifically, it is structured as follows.

First, it is adjusted as shown by the following:

a focal length of condenser lens system 10, f con = 12;

a focal length of the field lens, f fl = 100;

a maximum diameter of the field stop, D1 = 36 $\varnothing$; and

a maximum diameter of the aperture stop, D2 = 21.6 $\varnothing$.

As a result, maximum illuminated field size, h (max) is determined as:

$$h \text{ (max)} = 36 \text{ X } (12/100) = 4.3 \varnothing$$

Also, maximum numerical aperture, N.A. is determined as:

$$N.A. = 0.9 \text{ } (=10.8/12)$$

Here, the angle of the field stop in relation to field lens 4 ($\alpha$) determines the maximum diameter of aperture stop 6. The maximum value of the angle $\alpha$ is:

$$\alpha \text{ max} = 10.8/100 = 0.108$$

The case of using a low-magnification objective lens is discussed in reference to Figure 3 (b). The parallel light beams from light source 1, shown as the solid lines in the figure, pass through collector lens 3 and converge onto position A of the field stop; thereafter, they enter field lens 4 as diverging beams and become parallel light beams. These parallel light beams become slightly diverging light as they pass the low-magnification negative lens, which is part of condenser lens system 10, then enters fixed positive lens 11. Low-magnification negative lens 13 and fixed positive lens 11 form a substantially afocal optical system; therefore, the light which enters fixed positive lens 11 becomes a parallel light beam again and illuminates the surface of illuminated object 2.

On the other hand, the divergent light, shown as the dotted lines in the figure, becomes a parallel light beam as it passes through collector lens 3. After the diameter of the beam is adjusted by field stop 5, the parallel light beam then enters condenser lens system 10 and converges onto one point on the surface of the illuminated object after passing condenser lens system 10. It is obvious that an image of light source 1 images on the surface of illuminated object 2; thus, the illuminating system as a whole becomes critical for proper illumination.

In this embodiment, in which the illumination system is critical is formed, and is used for illumination for objective lenses of 1x to 4x. In the embodiment, as mentioned above, low-magnification negative lens 13 and fixed positive lens 11, which form the substantially afocal system, are adjusted to have a magnification $\beta$= 1.2. As a result, a compound focal length of field lens 4 and condenser lens system 10, f fc, is:

$$F \text{ fc} = f \text{ fl x } 1.2 = 120.$$

Therefore, the maximum illuminated field size, h (max), is

$$h \text{ (max)} = 120 \text{ x } \alpha \text{ max x } 2 = 26,$$

which satisfies a condition of a field of view h, required for an objective lens of 1x to be h = 25. In this case, aperture stop 6 functions as an adjuster for the size of the field of view h, that is, a field size.

On the other hand, the illumination system is substantially critical, therefore, field stop 5 functions as an aperture stop. Consequently, numerical aperture, N.A., is N.A. = (a radius of the field stop) / (a compound focal length) = 18 / 120 = 0.15 which satisfies an illumination condition of the numerical aperture for a general objective lens of 4x.

In order to satisfy field size h = 25, which is necessary for an objective lens of 1x, fixed positive lens 11 must have an effective diameter of at least $25\varnothing$, preferably, $26\varnothing$ for a small reserve. Also, in the above embodiment, the effective diameter of $26\varnothing$ is established as an afocal system with magnification $\beta = 1.2$ for low-magnification negative lens 13 and fixed positive lens 11; nonetheless, it is preferable that magnification $\beta$ is established as $1.1 < \beta < 1.5$. If the lower limit of the magnification is exceeded, the field size is not satisfactory, If the higher limit is exceeded, then, the numerical aperture is not satisfactory.

In the above working example, collector lens 3, field lens 4, fixed positive lens 11, high-magnification positive lens 12 and low-magnification negative lens 13 are separately handled as a single lens. Nonetheless, the above lenses can be replaced with a cemented lens or a plurality of lenses.

Also, the above mentioned microscope illuminating optical system is applied to a microscope published in US Patent Application Number 08/684,811, filed July 22, 1996, the disclosure of which is hereby incorporated by reference into the instant patent application.

As explained above, a condenser lens system of the present invention consists of, between the light source and the surface of the illuminated object:

the first lens group which is removed and has positive refractive power;
the second lens group which is fixed and has positive refractive power; and
the third lens group which is removed and has negative refractive power;
wherein:

in the first application condition, the first lens group is placed at the removed position and the third lens group is placed at the application position so that the condenser lens system as a whole has positive refractive power; and
in the second application condition, the first lens group is placed at the application position and the third lens group is place at the removed position so that the condenser lens system as a whole is substantially an afocal system.

Therefore, it is capable to correspond to a wide range of illumination conditions of objective lenses with a wide range of magnification between 1x and 100x by simply changing the lens groups in two steps or to the two positions of the first application condition and the second application condition.

Also, it is preferable that the effective diameter of the second lens group is larger than 26 mm in order to illuminate a wide field of view of 25 mm , which is required for an objective lens of 1x.

Furthermore, it is preferred that the magnification of the condenser lens system $\beta$ in the second application condition satisfies the condition $1.1 < \beta < 1.5$, which provides a condenser lens system with enough field of view and numerical aperture.

Additionally, the microscope illuminating optical system consists of the above condenser lens system and the relay optical system which is located on the optical path between the condenser lens system and the light source and which forms a light source image. When using a high-magnification objective lens of the microscope, the condenser lens system of the first application condition is applied when using a low-magnification objective lens, the condenser lens system of the second application condition is applied. Thereafter, the optical system between the light source and the surface of the illuminated object forms a Koehler illuminating system in the first application condition. In the second application condition, on the other hand, the optical system between the light source and the surface of the illuminated object forms a critical illuminating system. Hence, when using a high-magnification objective lens of the microscope (e.g. 10x to 100x), the condenser lens system is turned to be in the first application condition; when using a low-magnification objective lens (e.g. 1x to 4x), the condenser lens system is adjusted to be in the second application condition. These adjustments enable illumination to be applicable to a whole range of magnification from high (100x) to low (1x).

The invention should not be limited to the above embodiments. It should be clearly evident to one of ordinary skill in the art that the embodiments disclosed herein are merely three aspects of the possible ramifications of the presently disclosed invention.

## Claims

1. A condenser lens system for use in an illuminating optical system to lead light from a source of light to the surface of an illuminated object along an optical axis comprising:

a first lens group which has negative refractive power;

a second lens group which has positive refractive power and which is located between said first lens group and said surface of said illuminated object; and
a third lens group which has positive refractive power and which is located between said second lens group and said surface of said illuminated object;
characterized in that :

said first lens group is movable between a first position on said optical axis and a second position outside said optical axis; and
said third lens group is movable between a third position on said optical axis and a fourth position outside said optical axis; such that,
said condenser lens system has positve refractive power in a first application when said first lens group is placed at said second position and said third lens group is placed at said third position; and
said condenser lens system is a substantially afocal optical system in a second application when said first lens group is placed at said first position and said third lens group is placed at said fourth position.

2. The condenser lens system of claim 1, wherein an effective diameter of said second lens group is larger than 26 mm.

3. The condenser lens system of claims 1 or 2, which satisfies the following condition when said condenser lens system is in said second application condition:

$$1.1 < \beta < 1.5$$

wherein $\beta$: is the magnification of said condenser lens system in said second application condition.

4. A microscope illuminating optical system which comprises:

a light source;
a relay optical system which is located between said light source and a sampling surface of said microscope; and
a condenser lens system which is located between said relay optical system and said sampling surface; wherein:

said condenser lens system is characterized by:

a first lens group which has negative refractive power;
a second lens group which has positive refractive power and which is located between said first lens group and said sampling surface; and
a third lens group which has positive refractive power and which is located between said second lens group and said sampling surface; and further characterized in that:

said first lens group is movable between a first position on said optical axis and a second position outside said optical axis; and
said third lens group is movable between a third position on said optical axis and a fourth position outside said optical system such that said microscope is usable at low magnification when said condenser lens system is employed in a first application with said first lens group placed at said second position and said third lens group placed at said third position and said microscope is usable at high magnification when said condenser lens system is employed in a second application with said first lens group placed at said first position and said third lens group placed at said fourth position.

5. The microscope of claim 4 further characterized in that:

a light-source-side focal point of said condenser lens system when in said first application condition is substantially equal to an image of said light source formed by said relay optical system; and
said condenser lens system when in said second application condition substantially re-images said image of said light source formed by said relay optical system onto said sampling surface.

6.  The microscope of claim 5 further characterized by having an aperature stop located at said light-source-side focal point of said condenser lens system in said first application condition.

7.  The microscope of claim 6 further characterized by said aperature stop being located between said first position of said first lens group and a position of said second lens group.

8.  The microscope of claims 4, 5, 6 or 7 further characterized by a field stop located at a conjugate position with said sampling surface when in said first application condition and when in said second application condition said field stop determines the numerical aperature at said sampling surface.

9.  The microscope of claims 4, 5, 6 or 7 further characterized in that when said condenser lens system is in said first application condition the optical system located between said light source and said sampling surface is a Koehler illuminating optical system; and
    when said condenser lens system is in said second application condition the optical system located between said light source and said sampling surface is a critical illuminating optical system,

10. The microscope of claims 4, 5, 6, 7, 8 or 9 in which the magnification extends from a 1x unity magnification to 100x.

11. The microscope of claims 4, 5, 6, 7, 8, 9 or 10, wherein an effective diameter of said second lens group is larger than 26 mm.

12. The microscope of claims 4, 5, 6, 7, 8, 9, 10 or 11 which satisfies the following condition when said condenser lens system is in said second application condition:

$$1.1 < \beta < 1.5$$

    wherein $\beta$: is the magnification of said condenser lens system in said second application condition.

**FIG. 1**

**FIG. 2**

(a)

(b)

FIG. 3

( a )

( b )

EP 0 841 584 A2

FIG. 4

FIG. 5

FIG. 6

( a )

( b )

( c )